(19) Europäisches Patentamt
European Patent Office
Office européen des brevets

(11) **EP 4 471 380 A1**

(12) **EUROPÄISCHE PATENTANMELDUNG**

(43) Veröffentlichungstag:
**04.12.2024   Patentblatt 2024/49**

(21) Anmeldenummer: **23176383.0**

(22) Anmeldetag: **31.05.2023**

(51) Internationale Patentklassifikation (IPC):
**G01C 21/34** $^{(2006.01)}$

(52) Gemeinsame Patentklassifikation (CPC):
**G01C 21/3469**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder:
• **Schreck, Sebastian**
 **90429 Nürnberg (DE)**
• **Subbaiah Bommanda Ganapathi, Smaran**
 **90408 Nürnberg (DE)**
• **Thiem, Sebastian**
 **91413 Neustadt an der Aisch (DE)**

(74) Vertreter: **Siemens Patent Attorneys**
**Postfach 22 16 34**
**80506 München (DE)**

(54) **ERMITTLUNG EINER CO2-EMISSIONSARMEN ROUTE FÜR EIN ELEKTRISCHES FAHRZEUG, INSBESONDERE EINEN ELEKTRISCHEN LASTKRAFTWAGEN**

(57)    Es wird ein Verfahren zur Ermittlung einer $CO_2$-emissionsarmen Route (1, 2) von einem Startort (S) zu einem Zielort (E) für ein elektrisches Fahrzeug, insbesondere einen elektrischen Lastkraftwagen, vorgeschlagen. Das Verfahren ist erfindungsgemäß durch die folgenden Schritte gekennzeichnet:
- Bereitstellen mehrerer Routen R (1, 2) und ihrer zugehörigen Ladestationen S(R), wobei jeder Route und jeder Ladestation eine Binärvariable $\mu_r$ beziehungsweise $\mu_s$ zugeordnet ist, sodass durch die zu bestimmenden Werte der jeweiligen Binärvariable $\mu_r$, $\mu_s$ die zu ermittelnde Route (1, 2) sowie die auf dieser Route vorgesehenen Ladestationen (11, 12, 21, 22) festgelegt sind; und
- Ermitteln der $CO_2$-emissionsarmen Route (1, 2) und der zugehörigen Ladestationen (11, 12, 21, 22) durch ein Bestimmen der Werte der Binärvariablen $\mu_s$, $\mu_s$ mittels eines Optimierungsverfahrens, welches wenigstens ein Minimieren der Gesamtkohlenstoffdioxidemissionen

$$\sum_{r \in R} \mu_r \sum_{s \in S(R)} \mu_s E_{\text{ch},s} e_{s_t(s)}$$

umfasst, wobei $E_{\text{ch},s}$ eine an der Ladestation s (11, 12, 21, 22) erforderliche zu ladende Energiemenge und $e_{st(s)}$ einen spezifischen Emissionsfaktor des Energiemixes zum Ladezeitpunkt t an der Ladestation s (11, 12, 21, 22) bezeichnet.
   Weiterhin betrifft die Erfindung ein Verfahren zur Steuerung eines elektrischen Fahrzeuges sowie ein Routensystem (6) zur Ermittlung einer $CO_2$-emissionsarmen Route.

FIG 1

EP 4 471 380 A1

**Beschreibung**

Die Erfindung betrifft ein Verfahren gemäß dem Oberbegriff des Patentanspruches 1, ein Verfahren zur Steuerung eines elektrischen Lastkraftwagens gemäß dem Oberbegriff des Patentanspruches 12 sowie ein Routensystem gemäß dem Oberbegriff des Patentanspruches 13.

Mit der zunehmenden Verbreitung von elektrischen Lastkraftwagen (E-Lkw) im Güterverkehr wird eine möglichst optimale Routenplanung für Langstrecken immer komplexer.

Einerseits könnte die begrenzte Verfügbarkeit von Lademöglichkeiten entlang der Strecke beziehungsweise entlang der Route zu längeren Stopps führen und somit die Reisezeit verlängern.

Andererseits sind mit zunehmender volatiler erneuerbarer Erzeugung Preise für das Laden und spezifische $CO_2$-Emissionen der geladenen elektrischen Energie stark zeitabhängig.

Moderne Routing-Optimierungen für konventionell betankte Lastkraftwagen decken die genannten technischen Schwierigkeiten nicht ab. Das ist deshalb der Fall, da bei konventionell betankten Lastkraftwagen die genannten technischen Probleme nicht bestehen. Die Verfügbarkeit von Tankstellen in den meisten Ländern ist ausreichend hoch und die Kraftstoffpreise sind während der Transportzeit im Wesentlichen konstant. Daher werden herkömmliche optimale Leitweglenkungsalgorithmen, beispielsweise bezüglich kürzester Entfernung oder kürzeste Zeit, verwendet.

Der vorliegenden Erfindung liegt die Aufgabe zugrunde, eine möglichst $CO_2$-emissionsarme Route von einem Startort zu einem Zielort für einen elektrischen Lastkraftwagen bereitzustellen.

Die Aufgabe wird durch ein Verfahren mit den Merkmalen des unabhängigen Patentanspruches 1, durch ein Verfahren mit den Merkmalen des unabhängigen Patentanspruches 12 sowie durch ein Routensystem mit den Merkmalen des unabhängigen Patentanspruches 13 gelöst. In den abhängigen Patentansprüchen sind vorteilhafte Ausgestaltungen und Weiterbildungen der Erfindung angegeben.

Das erfindungsgemäße Verfahren zur Ermittlung einer $CO_2$-emissionsarmen Route von einem Startort zu einem Zielort für ein elektrisches Fahrzeug, insbesondere einen elektrischen Lastkraftwagen, ist wenigstens gekennzeichnet durch die folgenden Schritte:

- Bereitstellen mehrerer Routen $R$ und ihrer zugehörigen Ladestationen $S(R)$, wobei jeder Route und jeder Ladestation eine Binärvariable $\mu_r$ beziehungsweise $\mu_s$ zugeordnet ist, sodass durch die zu bestimmenden Werte der jeweiligen Binärvariable $\mu_r$, $\mu_s$ die zu ermittelnde Route sowie die auf dieser Route vorgesehenen Ladestationen festgelegt sind; und
- Ermitteln der $CO_2$-emissionsarmen Route und der zugehörigen Ladestationen durch ein Bestimmen der Werte der Binärvariablen $\mu_s$, $\mu_s$ mittels eines Optimierungsverfahrens, welches wenigstens ein Minimieren der Gesamtkohlenstoffdioxidemissionen

$$\sum_{r \in R} \mu_r \sum_{s \in S(R)} \mu_s E_{\mathrm{ch},s} e_{s_t(s)}$$

umfasst, wobei $E_{\mathrm{ch},s}$ eine an der Ladestation $s$ erforderliche zu ladende Energiemenge und $e_{s_t(s)}$ einen spezifischen Emissionsfaktor des Energiemixes zum Ladezeitpunkt $t$ an der Ladestation $s$ bezeichnet.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Insbesondere wird das Verfahren und/oder eine seiner Ausgestaltungen durch eine Optimierungseinheit durchgeführt, die dazu ausgebildet und eingerichtet ist, beispielsweise mittels Befehlen, die $CO_2$-emissionsarme Route gemäß der vorliegenden Erfindung zu ermitteln.

Das elektrische Fahrzeug ist besonders bevorzugt ein elektrischer Lastkraftwagen. Weiterhin kann das elektrische Fahrzeug als elektrischer Sprinter ausgebildet sein.

Eine Optimierung beziehungsweise ein Optimierungsverfahren im Sinne der vorliegenden Erfindung ist ein Verfahren zur Minimierung oder Maximierung einer Zielfunktion. Die Minimierung beziehungsweise Maximierung der Zielfunktion ist typischerweise äußerst komplex und kann daher lediglich numerisch erfolgen. Die Zielfunktion charakterisiert hierbei eine Eigenschaft oder eine Größe des betrachteten Systems.

Eine Minimierung der Zielfunktion kann unmittelbar und äquivalent durch einen Vorzeichenwechsel in eine Maximierung der Zielfunktion übergeführt werden, sodass vorliegend ohne eine Einschränkung des Schutzumfanges stets von einer Minimierung die Rede ist.

Vorliegend umfasst das Optimierungsverfahren die genannten Gesamtkohlenstoffdioxidemissionen derart, dass diese beim Optimierungsverfahren minimiert werden. Dies kann dadurch erreicht werden, dass der erfindungsgemäße Term für die Gesamtkohlenstoffdioxidemissionen durch die Zielfunktion umfasst ist oder als Nebenbedingung bei der Minimierung der bereitgestellten und verwendeten Zielfunktion verwendet wird. Beispielsweise ist

$$Z \supseteq \sum_{r \in R} \mu_r \sum_{s \in S(R)} \mu_s E_{\text{ch},s} e_{s_t(s)}$$

das heißt, dass die Zielfunktion $Z$ die Gesamtkohlenstoffdioxidemissionen umfasst oder, bis auf einen möglichen weiteren globalen Faktor, gleich den Gesamtkohlenstoffdioxidemissionen ist.

Hierbei kann bei der Energiemenge $E_{\text{ch,s}}$ eine Zeitabhängigkeit der Ladeenergien berücksichtigt werden, das heißt, dass $E_{\text{ch,s}}$ die Summe mehrere Ladeenergien ist, wobei jeder Ladeenergie eine jeweiliger spezifischer Emissionsfaktor zum jeweiligen Zeitpunkt der geladenen Energie zugeordnet ist. Dadurch kann vorteilhafterweise eine zeitvariable $CO_2$-Emissionen berücksichtigen werden.

Die Binärvariablen nehmen lediglich einen ersten und einen zweiten Wert an, beispielsweise den ersten Wert 0 und den zweiten Wert 1. Dadurch wird der technische Sachverhalt modelliert, dass das elektrische Fahrzeug, insbesondere der Lastkraftwagen, auf einer Route oder an einer Ladestation sein kann (zweiter Wert) oder eben nicht (erster Wert).

Weiterhin bilden die Binärvariablen die Variablen des Optimierungsverfahrens aus, das heißt, dass deren Werte durch das Ergebnis des Optimierungsverfahrens, das heißt durch die Minimierung der bereitgestellten Zielfunktion ermittelt werden. Durch das Ermitteln der Werte der Binärvariablen wird somit die $CO_2$-emissionsarme Route ermittelt und festgelegt.

Weiterhin ist jeder Ladestation ein spezifischer Emissionsfaktor des Energiemixes zum vorgesehenen Ladezeitpunkt zugeordnet. Dadurch wird der technische Sachverhalt modelliert, dass die spezifischen Kohlenstoffdioxidemissionen, die mit der geladenen Energiemenge verknüpft sind, zeitlich variabel und somit von der jeweiligen Ladestation und dem jeweiligen Ladezeitpunkt abhängig sind. Hierbei kann bei einem längeren Ladevorgang ein mittlerer Energiemix verwendet werden. Weiterhin können alternativ die Schwankungen des Energiemixes innerhalb des längeren Ladevorgangs berücksichtigt werden.

Die grundsätzlich infrage kommenden Routen sowie zugehörigen Ladestationen werden, beispielsweise durch ein Routensystem des elektrische Fahrzeugs, insbesondere des Lastkraftwagens, für das Verfahren bereitgestellt. Aus den bereitgestellten Routen wird dann gemäß des Verfahrens die $CO_2$-emissionsarmste Route ermittelt. Die ermittelte Route ist somit nicht die absolut $CO_2$-emissionsarmste Route, sondern die bezüglich der bereitgestellten Routen möglichst $CO_2$-emissionsarmste, wobei hierbei weitere Anforderungen berücksichtigt werden können, die zu einem Kompromiss zwischen einer möglichst geringen Kohlenstoffdioxidemission und einem möglichst geringen Wert der weiteren Anforderungen führt.

Gemäß der vorliegenden Erfindung wird somit eine möglichst $CO_2$-emissionsarme Route ermittelt. Diese wird anschließend der Fahrt des elektrische Fahrzeugs, insbesondere des Lastkraftwagens, zugrunde gelegt. Dadurch wird die Nachhaltigkeit des Transportes verbessert. Das ist deshalb der Fall, da die Gesamtkohlenstoffdioxidemissionen des Transportes, die mit der auf der Fahrt geladenen elektrischen Energie beziehungsweise Energiemenge verbunden sind, durch die ermittelte Route möglichst minimiert werden.

Weiterhin wird die Netzintegration von erneuerbaren Energien erhöht, da Laden zu niedrigen spezifischen $CO_2$-Emissionen mit hoher Einspeisung von erneuerbaren Energien korreliert ist.

Das erfindungsgemäße Verfahren zur Steuerung eines elektrische Fahrzeugs, insbesondere eines elektrischen Lastkraftwagens, entlang einer Route von einem Startort zu einem Zielort, wobei das elektrische Fahrzeug, insbesondere der Lastkraftwagen, zum autonomen Fahren ausgebildet ist, ist gekennzeichnet dadurch, dass die dem autonomen Fahren zugrunde gelegte Route mittels einem Verfahren gemäß der vorliegenden Erfindung und/oder einer ihrer Ausgestaltungen ermittelt wird.

Es ergeben sich zum erfindungsgemäßen Verfahren gleichartige, gleichwertige und gleichwirkende Vorteile und/oder Ausgestaltungen des erfindungsgemäßen Verfahrens zur Steuerung des elektrischen Lastkraftwagens.

Das erfindungsgemäße Routensystem zur Ermittlung einer $CO_2$-emissionsarmen Route von einem Startort zu einem Zielort für ein elektrisches Fahrzeugs, insbesondere einen elektrischen Lastkraftwagen, ist dadurch gekennzeichnet, dass das Routensystem eine Optimierungseinheit umfasst, die dazu ausgebildet ist, die $CO_2$-emissionsarme Route mittels einem Verfahren gemäß der vorliegenden Erfindung und/oder einer ihrer Ausgestaltungen zu ermitteln.

Insbesondere umfasst die Optimierungseinheit zum Ermitteln der Route mittels des Optimierungsverfahrens eine entsprechend ausgebildete und mittels Befehlen eingerichtete Recheneinheit.

Es ergeben sich zum erfindungsgemäßen Verfahren gleichartige, gleichwertige und gleichwirkende Vorteile und/oder Ausgestaltungen des erfindungsgemäßen Routensystems.

Gemäß einer vorteilhaften Ausgestaltung der Erfindung wird zusätzlich eine Gesamtbelegung

$$\sum_{r \in R} \mu_r \sum_{s \in S(R)} o_{s_t(s)}$$

minimiert, wobei $o_{s_t(s)}$ eine relative Belegung der Ladestation *s* zum Ladezeitpunkt *t* an der Ladestation *s* bezeichnet.

Dadurch werden vorteilhafterweise die relativen Belegungen der Ladestationen berücksichtigt. Mit anderen Worten wird nun eine Route ermittelt, die nicht nur möglichst $CO_2$-emissionsarm ist, sondern auf welcher ebenfalls die Ladestationen eine möglichst geringe Belegung aufweisen.

Hierbei kann $o_{s_t(s)}$ Werte im Bereich von 0 bis 1 oder im Bereich von 0 Prozent bis 100 Prozent aufweisen. Ein Wert von 0 beziehungsweise 0 Prozent kennzeichnet hierbei, dass die jeweilige Ladestation zum Zeitpunkt *t* (voraussichtlich) nicht belegt ist. Ein Wert von 1 beziehungsweise von 100 Prozent kennzeichnet, dass die jeweilige Ladestation zum Ladezeitpunkt *t* (voraussichtlich) voll belegt ist. Hierbei können für die relativen Belegungen Vorhersagewerte verwendet werden, die beispielsweise durch historische Daten ermittelt wurden. Das Minimieren beziehungsweise Berücksichtigen der Belegung hat die technischen Vorteile, dass lange Wartezeiten oder lange Reisezeiten/Transportzeiten sowie Staus an den jeweiligen Ladestationen vermieden werden.

In einer vorteilhaften Weiterbildung der Erfindung wird zusätzlich eine Gesamtvergütung

$$\sum_{r \in R} \mu_r \sum_{s \in S(R)} \mu_s E_{\mathrm{ch},s} \lambda_{s_t(s)}$$

minimiert, wobei $\lambda_{s_t(s)}$ eine Vergütung, beispielsweise in Cent pro Kilowattstunde, zum Ladezeitpunkt *t* an der Ladestation *s* bezeichnet.

Mit anderen Worten werden dadurch ebenfalls die mit den Ladevorgängen verbundenen Kosten, allerdings stets im Hinblick auf möglichst geringe Kohlenstoffdioxidemissionen, minimiert. Dadurch können die Transportkosten sowie die Gesamtkohlenstoffdioxidemissionen gemeinsam verringert werden.

Gemäß einer vorteilhaften Ausgestaltung der Erfindung zur Ermittlung der Route und der zugehörigen Ladestationen erfolgt das Minimieren der Gesamtkohlenstoffdioxidemissionen, der Gesamtbelegung und der Gesamtvergütung mittels einer gemeinsamen Zielfunktion des Optimierungsverfahrens.

Mit anderen Worten umfasst die gemeinsame Zielfunktion, deren Wert mittels des Optimierungsverfahrens minimiert wird, die Gesamtkohlenstoffdioxidemissionen, die Gesamtbelegung und die Gesamtvergütung. Somit gilt:

$$Z \supseteq \sum_{r \in R} \mu_r \sum_{s \in S(R)} \mu_s E_{\mathrm{ch},s} e_{s_t(s)}, \sum_{r \in R} \mu_r \sum_{s \in S(R)} o_{s_t(s)}, \sum_{r \in R} \mu_r \sum_{s \in S(R)} \mu_s E_{\mathrm{ch},s} \lambda_{s_t(s)}$$

Dadurch wird vorteilhafterweise ermöglicht, dass die drei genannten Größen gemeinsam optimiert und somit minimiert werden. Es wird somit eine Route ermittelt, die möglichst $CO_2$-arm, möglichst wenig belegte Ladestationen sowie möglichst geringe Kosten aufweist beziehungsweise einen synergetischen Kompromiss aus minimaler Kohlenstoffdioxidemission, minimaler und minimalen Kosten ausbildet.

In einer vorteilhaften Weiterbildung der Erfindung wird zur Ermittlung der Route und der zugehörigen Ladestationen s die gemeinsame Zielfunktion

$$w_{\mathrm{c}} \cdot \sum_{r \in R} \mu_r \sum_{s \in S(R)} \mu_s E_{\mathrm{ch},s} \lambda_{s_t(s)} + w_{\mathrm{co2}} \cdot \sum_{r \in R} \mu_r \sum_{s \in S(R)} \mu_s E_{\mathrm{ch},s} e_{s_t(s)} + w_o$$
$$\cdot \sum_{r \in R} \mu_r \sum_{s \in S(R)} \mu_s E_{\mathrm{ch},s} \lambda_{s_t(s)}$$

minimiert, wobei $w_c$, $w_{co2}$ und $w_o$ festgelegte Gewichtungsfaktoren sind.

Mit anderen Worten ist

$$Z \supseteq w_{\mathrm{c}} \cdot \sum_{r \in R} \mu_r \sum_{s \in S(R)} \mu_s E_{\mathrm{ch},s} \lambda_{s_t(s)} + w_{\mathrm{co2}} \cdot \sum_{r \in R} \mu_r \sum_{s \in S(R)} \mu_s E_{\mathrm{ch},s} e_{s_t(s)} + w_o \cdot \sum_{r \in R} \mu_r \sum_{s \in S(R)} \mu_s E_{\mathrm{ch},s} \lambda_{s_t(s)}$$

Dadurch kann vorteilhaftweise eine Gewichtung zwischen den Einflussgrößen, das heißt zwischen möglichst geringen Gesamtkohlenstoffdioxidemissionen, möglichst geringer Belegung und möglichst geringen Kosten erfolgen. Hierbei weisen die Gewichtungen bevorzugt einen Wert ungleich Null auf.

Gemäß einer vorteilhaften Ausgestaltung der Erfindung erfolgt das Minimieren der Gesamtkohlenstoffdioxidemissionen über die Nebenbedingung

$$\sum_{r \in R} \mu_r \sum_{s \in S(R)} \mu_s E_{\mathrm{ch},s} e_{s_t(s)} \leq C_0$$

wobei $C_0$ eine festgelegte maximale Gesamtkohlenstoffdioxidemission bezeichnet.

Mit anderen Worten wird das Minimieren der Gesamtkohlenstoffdioxidemissionen dadurch modelliert, dass eine maximale Gesamtkohlenstoffdioxidemission nicht überschritten wird. Dadurch werden die Gesamtkohlenstoffdioxidemissionen im Sinne der vorliegenden Erfindung ebenfalls möglichst minimiert, jedoch wird eine bestimmte maximale Emission zugelassen. Vorteilhafterweise kann dadurch das Auffinden einer Lösung des Optimierungsproblems erleichtert werden. Die zugehörige Zielfunktion wird hierbei beispielsweise durch die Gesamtvergütung gebildet. Diese wird unter der oben genannten Nebenbedingung für die Gesamtkohlenstoffdioxidemissionen dann minimiert.

In einer vorteilhaften Weiterbildung der Erfindung erfolgt das Minimieren der Gesamtbelegung über die Nebenbedingung

$$\sum_{r \in R} \mu_r \sum_{s \in S(R)} o_{s_t(s)} \leq O_0$$

wobei $O_0$ eine festgelegte maximale Gesamtbelegung bezeichnet.

Mit anderen Worten wird das Minimieren der Gesamtbelegung dadurch modelliert, dass eine maximale Gesamtbelegung nicht überschritten wird. Dadurch wird die Gesamtbelegung im Sinne der vorliegenden Erfindung ebenfalls möglichst minimiert, jedoch wird eine bestimmte maximale Belegung zugelassen. Vorteilhafterweise kann dadurch das Auffinden einer Lösung des Optimierungsproblems erleichtert werden. Die zugehörige Zielfunktion wird hierbei beispielsweise durch die Gesamtvergütung und/oder Gesamtkohlenstoffdioxidemissionen gebildet. Diese wird unter der oben genannten Nebenbedingung für die Gesamtbelegung dann minimiert.

Die Belegung einer Ladestation wird somit sinnbildlich aus der Zielfunktion herausgenommen und alternativ als Nebenbedingung für das Optimierungsproblem verwendet. In diesem Fall wird die Gesamtbelegung durch eine maximal tolerierte Belegung begrenzt. Da die Auslastung/Belegung auf Prognosen basiert und daher immer ungenau ist, stellt eine bestimmte maximale Auslastung kleiner 100 Prozent somit einen gewissen Sicherheitspuffer dafür bereit, dass auch eine Ladestation auf der Strecke verfügbar ist.

Gemäß einer vorteilhaften Ausgestaltung der Erfindung wird beim Minimieren die Nebenbedingung $\sum_{r \in R} \mu_r = 1$ berücksichtigt.

Dadurch wird vorteilhafterweise technisch sichergestellt, dass das elektrische Fahrzeug, insbesondere der elektrische Lastkraftwagen, ausschließlich eine Route befahren kann. Mit anderen Worten wird lediglich genau eine Route ermittelt.

In einer vorteilhaften Weiterbildung der Erfindung werden beim Minimieren beziehungsweise beim Optimierungsverfahren die weiteren Nebenbedingungen $E_{\mathrm{bat},s} = E_{\mathrm{bat},s-1} - E_{\mathrm{dch},s-1 \to s} + E_{\mathrm{ch},s}$ und $E_{\mathrm{bat},s} \geq E_{\mathrm{dch},s \to s+1} + E_{\mathrm{ch},s}$ berücksichtigt, wobei $E_{\mathrm{bat},s}$ eine Energiemenge einer Batterie des elektrischen Fahrzeuges, insbesondere des elektrischen Lastkraftwagens, am Ende des Ladevorgangs an der Ladestation $s$ und $E_{\mathrm{dch},s-1 \to s}$ eine für die Fahrt von der Ladestation $s$ - $1$ zur Ladestation $s$ erforderliche Energiemenge bezeichnet.

Dadurch wird vorteilhafterweise sichergestellt, dass die technischen Anforderungen der Ladevorgänge sowie der Fahrt bei der Optimierung berücksichtigt werden und somit das Ergebnis der Optimierung diese technischen Anforderungen respektiert. Mit anderen Worten stellen diese sicher, dass ebenfalls der erforderliche Ladebedarf/SOC (State Of Charge) erfüllt ist.

Gemäß einer vorteilhaften Ausgestaltung der Erfindung werden die mehreren Routen $R$ und ihrer zugehörigen Ladestationen durch ein Routensystem des Lastkraftwagens bereitgestellt.

Dadurch können vorteilhafterweise bekannte Systeme/Algorithmen zur Ermittlung der grundsätzlichen Routen und Ladestationen verwendet werden.

In einer vorteilhaften Weiterbildung der Erfindung wird die ermittelte Route und die zugehörigen Ladestationen auf der ermittelten Route an das Routensystem des elektrischen Fahrzeuges, insbesondere des elektrischen Lastkraftwagens, übermittelt.

Dadurch kann die ermittelte Route vorteilhafterweise durch das Routensystem des elektrischen Fahrzeuges verwendet werden.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

Figur 1    eine Darstellung des grundsätzlichen Routing-Problems; und

Figur 2    ein Ablaufdiagramm eines Verfahrens gemäß einer Ausgestaltung der vorliegenden Erfindung.

Gleichartige, gleichwertige oder gleichwirkende Elemente können in einer der Figuren oder in den Figuren mit denselben Bezugszeichen versehen sein.

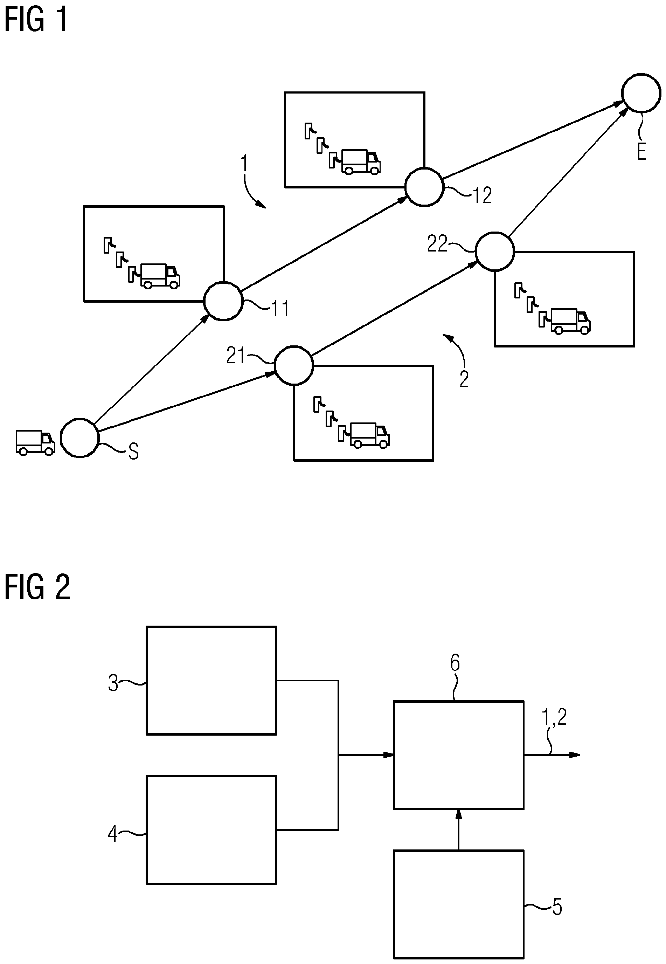

Die Figur 1 zeigt ein beispielhaftes Routing-Problem für eine erste und zweite Route 1, 2. Hierbei weist die erste Route 1 zwei Ladestationen 11, 12 auf. Die zweite Route 2 weist ebenfalls exemplarisch zwei Ladestationen 21, 22 auf. Die Routen 1, 2 erstrecken sich jeweils von einem gemeinsamen Startort S zu einem gemeinsamen Zielort E. Sie bilden somit bezüglich des Startortes S und dem Zielort E alternative Routen aus.

Zur Lösung des Routing-Problems müssen sinnbildlich mehrere Entscheidungen getroffen werden, insbesondere welche der Routen 1, 2 verwendet werden soll, sowie welche der Ladestation 11, 12 der ersten Route 1 und welche der Ladestationen 21, 22 der zweiten Route 2 verwendet werden sollen.

Zur Ermittlung einer möglichst $CO_2$-emissionsarmen Route und somit die im Sinne der vorliegenden Erfindung möglichst optimalen Lösung für dieses Problem, wird ein gemischtganzzahliges Optimierungsproblem mit mehreren Kriterien gelöst. Hierbei werden mehrere Routen, die beispielsweise durch ein Routensystem (Navigationsplanungssystem), insbesondere eines Lastkraftwagens, bereitgestellt werden.

Weiterhin können Prognosen über die Verfügbarkeit von Ladesäulen (Belegung), Energiepreise (Vergütung) sowie spezifische CO2-Emissionsfaktoren der jeweiligen Energiemixe verwendet werden. Ergebnis der Optimierung ist eine möglichst $CO_2$-emissionsarme Route mit zugehörigen Ladestationen, welche die weiteren genannten Anforderungen ebenfalls berücksichtigt.

Die Figur 2 zeigt ein Ablaufdiagramm eines Verfahrens gemäß einer Ausgestaltung der vorliegenden Erfindung.

Ein Grundgedanke der Erfindung ist die Ermittlung einer möglichst $CO_2$-emissionsarmen Route, wobei hierbei die jeweiligen Energiemixe der Ladestationen berücksichtigt werden. Die Ermittlung der Route und der zugehörigen Ladesäulen ist mit dem Bezugszeichen 6 gekennzeichnet, wobei das Ermitteln durch ein erfindungsgemäßes Routensystem 6 durchgeführt wird.

Hierzu werden zunächst in Abhängigkeit des Startortes und des Zielortes mehrere alternative Routen durch ein klassisches Routensystem (Navigationsplanungssystem) bereitgestellt. Dies ist mit dem Bezugszeichen 3 gekennzeichnet.

Weiterhin werden die jeweiligen Energiemixe $e_{s_t(s)}$ der Ladestationen, beispielsweise in der Einheit Gramm $CO_2$ pro Kilowattstunde, die jeweiligen Energiepreise $\lambda_{s_t(s)}$ der Ladestationen, beispielsweise in der Einheit Cent pro Kilowattstunde, sowie eine jeweilige relative Belegung $o_{s_t(s)}$ der Ladestationen, beispielsweise in Prozent, durch eine Vorhersageeinheit 4 für eine Optimierungseinheit 6 beziehungsweise das Routensystem 6 als verwendbare und lesbare Daten bereitgestellt.

Weiterhin können Gewichtungen $w_c$, $w_{co2}$ und $w_o$ der Gesamtkohlenstoffdioxidemissionen, der Energiekosten beziehungsweise der Gesamtbelegung vorgesehen sein und bereitgestellt werden. Dies ist mit dem Bezugszeichen 5 gekennzeichnet.

Sei mit $S(R)$ die Menge an Ladestationen $s \in S(R)$ auf der Route $R$ mit einer bekannten beziehungsweise bereitgestellten jeweiligen Ankunftszeiten/Ladezeitpunkt $s_t$ bezeichnet.

Weiterhin seien mit $\mu_r$ und $\mu_s$ binäre Entscheidungsvariablen bezeichnet, die die jeweilige Route $R$ beziehungsweise die jeweilige Ladestation $s$ kennzeichnen.

Gemäß dem vorliegenden Ausführungsbeispiel wird durch das Routensystem 6 ein Optimierungsproblem zur Ermittlung der möglichst $CO_2$-emissionsarmen Route computergestützt und numerisch gelöst.

Der Optimierung liegt die Zielfunktion $Z = w_c \cdot C + w_{co2} \cdot E + w_o \cdot O$ zugrunde. Hierbei bezeichnet $C = \sum_{r \in R} \mu_r \sum_{s \in S(R)} \mu_s E_{ch,s} \lambda_{s_t(s)}$ die Gesamtkosten, $E = \sum_{r \in R} \mu_r \sum_{s \in S(R)} \mu_s E_{ch,s} e_{s_t(s)}$ die Gesamtkohlenstoffdioxidemissionen und $O$

$= \sum_{r\in R}\mu_r \sum_{s\in S(R)} o_{s_{t(s)}}$ die Gesamtbelegung. Bei der Optimierung wird nun der Wert der Zielfunktion **Z** minimiert, das heißt es werden die Werte der Binärvariablen $\mu_r$, $\mu_s$ ermittelt, die die Zielfunktion minimieren. Die ermittelten Werte der Binärvariablen legen dann die Route sowie die auf der Route verwendeten Ladestationen fest.

Weiterhin werden bei der Optimierung beziehungsweise beim Optimierungsverfahren, das heißt bei der Minimierung der Zielfunktion, mehrere Nebenbedingungen berücksichtigt beziehungsweise verwendet.

Bevorzugt wird die Nebenbedingung $\sum_{r\in R}\mu_r = 1$ verwendet. Diese stellt technisch sicher, dass lediglich eine Route für das elektrische Fahrzeug, insbesondere durch den Lastkraftwagen, tatsächlich befahren werden kann.

Weiterhin werden bevorzugt die Nebenbedingungen $E_{bat,s} = E_{bat,s-1} - E_{dch,s-1\to s} + E_{ch,s}$ und $E_{bat,s} \geq E_{dch,s\to s+1} + E_{ch,s}$ berücksichtigt, wobei $E_{bat,s}$ eine Energiemenge einer Batterie des Lastkraftwagens am Ende des Ladevorgangs an der Ladestation **s** und $E_{dch,s-1\to s}$ eine für die Fahrt von der Ladestation **s - 1** zur Ladestation **s** erforderliche Energiemenge bezeichnet. Dadurch werden die technisch erforderlichen Lademengen/SOC sichergestellt.

Alternativ zur oben genannten Zielfunktion, können die Gesamtkohlenstoffdioxidemissionen und/oder die Gesamtbelegung als Nebenbedingung zur Zielfunktion **Z = C** berücksichtigt werden. Hierbei werden die Gesamtkohlenstoffdioxidemissionen und/oder die Gesamtbelegung auf ein jeweiliges tolerierbares Maximum beschränkt. Dadurch kann das Auffinden einer Lösung erleichtert und somit verbessert werden.

Die ermittelte Lösung, das heißt die ermittelte Route mit zugehörigen Ladestationen, ist in der Figur 2 mit dem Bezugszeichen 1, 2 gekennzeichnet. In dem deutlich vereinfachten vorliegenden Beispiel wird somit entweder die erste Route 1 oder die zweite Route 2 ermittelt.

Die ermittelte Route 1, 2 kann anschließend an ein Navigationssystem beziehungsweise Routensystem übermittelt werden. Ist beispielsweise der Lastkraftwagen zum autonomen Fahren ausgebildet, kann dieser nach dem Übermitteln die Fahrt entsprechend der ermittelten Route 1, 2 und der zugehörigen Ladestationen aufnehmen. Das Verfahren kann mehrfach, ebenfalls unter der Fahrt, wiederholt und somit die möglichst $CO_2$-emissionsarme Route, erneut ermittelt, das heißt aktualisiert werden.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

| | |
|---|---|
| 1 | erste Route |
| 2 | zweite Route |
| 3 | Routensystem |
| 4 | Prognoseeinheit |
| 5 | Gewichtungsfaktoren |
| 6 | Routensystem/Ermitteln der Route |
| 11 | erste Ladestation der ersten Route |
| 12 | zweite Ladestation der ersten Route |
| 21 | erste Ladestation der zweiten Route |
| 22 | zweite Ladestation der zweiten Route |
| S | Startort |
| E | Zielort |

**Patentansprüche**

1. Verfahren zur Ermittlung einer $CO_2$-emissionsarmen Route (1, 2) von einem Startort (S) zu einem Zielort (E) für eine elektrisches Fahrzeug, insbesondere einen elektrischen Lastkraftwagen, **gekennzeichnet durch** die Schritte:

   - Bereitstellen mehrerer Routen **R** (1, 2) und ihrer zugehörigen Ladestationen **S(R),** wobei jeder Route und jeder Ladestation eine Binärvariable $\mu_r$ beziehungsweise $\mu_s$ zugeordnet ist, sodass durch die zu bestimmenden Werte der jeweiligen Binärvariable $\mu_r$, $\mu_s$ die zu ermittelnde Route (1, 2) sowie die auf dieser Route vorgesehenen Ladestationen (11, 12, 21, 22) festgelegt sind; und
   - Ermitteln der $CO_2$-emissionsarmen Route (1, 2) und der zugehörigen Ladestationen (11, 12, 21, 22) durch ein Bestimmen der Werte der Binärvariablen $\mu_s$, $\mu_s$ mittels eines Optimierungsverfahrens, welches wenigstens ein Minimieren der Gesamtkohlenstoffdioxidemissionen

$$\sum_{r \in R} \mu_r \sum_{s \in S(R)} \mu_s E_{\mathrm{ch},s} e_{s_t(s)}$$

umfasst, wobei $E_{\mathrm{ch},s}$ eine an der Ladestation $s$ (11, 12, 21, 22) erforderliche zu ladende Energiemenge und $e_{s_t(s)}$ einen spezifischen Emissionsfaktor des Energiemixes zum Ladezeitpunkt $t$ an der Ladestation $s$ (11, 12, 21, 22) bezeichnet.

2. Verfahren gemäß Anspruch 1, **gekennzeichnet dadurch, dass** zusätzlich eine Gesamtbelegung

$$\sum_{r \in R} \mu_r \sum_{s \in S(R)} o_{s_t(s)}$$

minimiert wird, wobei $o_{s_t(s)}$ eine relative Belegung der Ladestation $s$ (11, 12, 21, 22) zum Ladezeitpunkt $t$ an der Ladestation $s$ (11, 12, 21, 22) bezeichnet.

3. Verfahren gemäß Anspruch 1 oder 2, **gekennzeichnet dadurch, dass** zusätzlich eine Gesamtvergütung

$$\sum_{r \in R} \mu_r \sum_{s \in S(R)} \mu_s E_{\mathrm{ch},s} \lambda_{s_t(s)}$$

minimiert wird, wobei $\mu_{s_t(s)}$ eine Vergütung zum Ladezeitpunkt $t$ an der Ladestation $s$ (11, 12, 21, 22) bezeichnet.

4. Verfahren gemäß einem der vorhergehenden Ansprüche, **gekennzeichnet dadurch, dass** zur Ermittlung der Route (1, 2) und der zugehörigen Ladestationen (11, 12, 21, 22) das Minimieren der Gesamtkohlenstoffdioxidemissionen, der Gesamtbelegung und der Gesamtvergütung mittels einer gemeinsamen Zielfunktion des Optimierungsverfahrens erfolgt.

5. Verfahren gemäß Anspruch 4, **gekennzeichnet dadurch, dass** zur Ermittlung der Route (1, 2) und der zugehörigen Ladestationen s (11, 12, 21, 22) die gemeinsame Zielfunktion

$$w_{\mathrm{c}} \cdot \sum_{r \in R} \mu_r \sum_{s \in S(R)} \mu_s E_{\mathrm{ch},s} \lambda_{s_t(s)} + w_{\mathrm{co2}} \cdot \sum_{r \in R} \mu_r \sum_{s \in S(R)} \mu_s E_{\mathrm{ch},s} e_{s_t(s)} + w_o$$
$$\cdot \sum_{r \in R} \mu_r \sum_{s \in S(R)} \mu_s E_{\mathrm{ch},s} \lambda_{s_t(s)}$$

minimiert wird, wobei $w_{\mathrm{c}}$, $w_{\mathrm{co2}}$ und $w_o$ festgelegte Gewichtungsfaktoren (5) sind.

6. Verfahren gemäß einem der Ansprüche 1 bis 3, **gekennzeichnet dadurch, dass** das Minimieren der Gesamtkohlenstoffdioxidemissionen über die Nebenbedingung

$$\sum_{r \in R} \mu_r \sum_{s \in S(R)} \mu_s E_{\mathrm{ch},s} e_{s_t(s)} \le C_0$$

erfolgt, wobei $C_0$ eine festgelegte maximale Gesamtkohlenstoffdioxidemission bezeichnet.

7. Verfahren gemäß einem der Ansprüche 1 bis 3 oder 6, **gekennzeichnet dadurch, dass** das Minimieren der Gesamtbelegung über die Nebenbedingung

$$\sum_{r \in R} \mu_r \sum_{s \in S(R)} o_{s_t(s)} \leq O_0$$

erfolgt, wobei $O_0$ eine festgelegte maximale Gesamtbelegung bezeichnet.

8. Verfahren gemäß einem der vorhergehenden Ansprüche, **gekennzeichnet dadurch, dass** beim Minimieren die Nebenbedingung $\sum_{r \in R}\mu_r = 1$ berücksichtigt wird.

9. Verfahren gemäß einem der vorhergehenden Ansprüche, **gekennzeichnet dadurch, dass** beim Minimieren die weiteren Nebenbedingungen $E_{bat,s} = E_{bat,s-1} - E_{dch,s-1 \to s} + E_{ch,s}$ und $E_{bat,s} \geq E_{dch,s \to s+1} + E_{ch,s}$ berücksichtigt werden, wobei $E_{bat,s}$ eine Energiemenge einer Batterie des elektrischen Fahrzeuges am Ende des Ladevorgangs an der Ladestation $s$ (11, 12, 21, 22) und $E_{dch,s-1 \to s}$ eine für die Fahrt von der Ladestation $s - 1$ (11, 12, 21, 22) zur Ladestation $s$ (11, 12, 21, 22) erforderliche Energiemenge bezeichnet.

10. Verfahren gemäß einem der vorhergehenden Ansprüche, **gekennzeichnet dadurch, dass** die mehreren Routen $R$ (1, 2) und ihrer zugehörigen Ladestationen $S(R)$ durch ein Routensystem (3) des elektrischen Fahrzeuges bereitgestellt werden.

11. Verfahren gemäß Anspruch 10, **gekennzeichnet dadurch, dass** die ermittelte Route (1, 2) und zugehörigen Ladestationen (11, 12, 21, 22) auf der ermittelten Route (1, 2) an das Routensystem (3) des elektrischen Fahrzeuges übermittelt werden.

12. Verfahren zur Steuerung eines elektrischen Fahrzeuges, insbesondere eines elektrischen Lastkraftwagens, entlang einer Route (1, 2) von einem Startort (S) zu einem Zielort (E), wobei das Fahrzeug zum autonomen Fahren ausgebildet ist, **gekennzeichnet dadurch, dass** die dem autonomen Fahren zugrunde gelegte Route (1, 2) mittels einem Verfahren gemäß einem der vorhergehenden Ansprüche ermittelt wird.

13. Routensystem (6) zur Ermittlung einer $CO_2$-emissionsarmen Route (1, 2) von einem Startort (S) zu einem Zielort (E) für ein elektrisches Fahrzeug, insbesondere einen elektrischen Lastkraftwagen, **dadurch gekennzeichnet, dass** das Routensystem eine Optimierungseinheit umfasst, die dazu ausgebildet ist, die $CO_2$-emissionsarme Route (1, 2) mittels einem Verfahren gemäß einem der Ansprüche 1 bis 9 zu ermitteln.

## FIG 1

## FIG 2

Europäisches
Patentamt

European
Patent Office

Office européen
des brevets

# EUROPÄISCHER RECHERCHENBERICHT

**Nummer der Anmeldung**

**EP 23 17 6383**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2023/152108 A1 (VREELAND WILLIAM [US]) 18. Mai 2023 (2023-05-18) * Ansprüche 1,6; Abbildungen 3,4 * ----- | 1,13 | INV. G01C21/34 |
| | | | **RECHERCHIERTE SACHGEBIETE (IPC)** G01C |

Der vorliegende Recherchenbericht wurde für alle Patentansprüche erstellt

| Recherchenort | Abschlußdatum der Recherche | Prüfer |
|---|---|---|
| Den Haag | 30. Oktober 2023 | Tabellion, Marc |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-10-2023

| Im Recherchenbericht angeführtes Patentdokument | Datum der Veröffentlichung | Mitglied(er) der Patentfamilie | Datum der Veröffentlichung |
|---|---|---|---|
| US 2023152108 A1 | 18-05-2023 | CN 116136413 A | 19-05-2023 |
| | | DE 102022211290 A1 | 25-05-2023 |
| | | US 2023152108 A1 | 18-05-2023 |

EPO FORM P0461

Für nähere Einzelheiten zu diesem Anhang : siehe Amtsblatt des Europäischen Patentamts, Nr.12/82